# EUROPÄISCHE PATENTSCHRIFT

(11) **EP 2 325 532 B1**
(45) Veröffentlichungstag und Bekanntmachung des Hinweises auf die Patenterteilung: **20.03.2013**
(21) Anmeldenummer: 10190295.5
(22) Anmeldetag: 07.11.2010
(51) Int. Cl.: F16K 15/03, B65D 77/06, B65D 77/04

(54) **Transport- und Lagerbehälter für Flüssigkeiten**
Transport and storage container for fluids
Récipient de transport et de stockage pour liquides

(30) Priorität: 24.11.2009 DE 102009047075
(43) Veröffentlichungstag der Anmeldung: 25.05.2011
(73) Patentinhaber: Protechna S.A., 1701 Fribourg (CH)
(72) Erfinder:
(74) Vertreter: advotec.

(56) Entgegenhaltungen:
- EP-A1- 1 852 390
- DE-A1-102004 046 224
- US-A- 5 551 479

## Beschreibung

Die vorliegende Erfindung betrifft einen Transport-und Lagerbehälter nach Ansprüch 1.

Transport- und Lagerbehälter der eingangs genannten Art werden regelmäßig als so genannte "Umlaufbehälter" eingesetzt, die entsprechend wiederholt befüllt werden. Um ein möglichst großes Umsatzvolumen der in den Behältern verfüllten Flüssigkeiten zu ermöglichen, ist es wesentlich, eine möglichst vollständige Entleerung der Behälter zu ermöglichen, so dass beim nächsten Befüllungsvorgang das gesamte Behältervolumen für die Neufüllung zur Verfügung steht. Teilweise kommt es auch darauf an, eine möglichst vollständige Entleerung der Behälter zu erreichen, um aufwendige Spül- und Reinigungsvorgänge nicht durchführen zu müssen, oder zumindest diese Vorgänge auf ein entsprechendes Mindestmaß zu beschränken. Als ein Beispiel hierfür kann die Befüllung von Umlaufbehältern mit Pestiziden oder ähnlichen Substanzen genannt werden, wobei in derartigen Fällen nicht nur eine Spülung und Reinigung der Behälter notwendig ist, sondern darüber hinaus auch noch weitere Probleme mit der Entsorgung der durch die Pestizide oder dergleichen verunreinigten Spülflüssigkeiten auftreten. Eine Entnahmearmatur für derartige Behältes ist aus EP 1 852 390 bekannt.

Der vorliegenden Erfindung liegt nunmehr die Aufgabe zugrunde, einen Transport- und Lagerbehälter für Flüssigkeiten zu ermöglichen, der im Wesentlichen vollständig zu entleeren ist.

Zur Lösung dieser Aufgabe wird ein Transport-und Lagerbehältner mit einem Rückschlagventil mit den Merkmalen des Anspruchs 1 vorgeschlagen.

Erfindungsgemäß weist das Rückschlagventil ein Ventilgehäuse auf, das mit einem Anschlussteil zum Anschluß an ein Armaturengehäuse der Entnahmearmatur und/oder den Entleerstutzen des Flüssigkeitsbehälters und mit einem sich vom Anschlussteil durch den Entleerstutzen bis zumindest in einen Einströmbereich des Entleerstutzen erstreckenden Ventilstutzen versehen ist, wobei der Ventilstutzen einen entgegen der Ausströmrichtung gegen einen Ventilsitz schließenden Ventilkörper aufweist und der Ventilsitz im Einströmbereich oder in einem in Ausströmrichtung dem Einströmbereich vorgeordneten Bereich angeordnet ist.

Üblicherweise wird das Flüssigkeitsvolumen, das nach einer Betätigung der Absperreinrichtung in den Flüssigkeitsbehälter zurücklaufen kann, durch den Abstand der Absperreinrichtung von der Ausströmöffnung des Innenbehälters bestimmt. Bei Innenbehältern, die mit einem Entleerstutzen versehen sind, ist die Ausströmöffnung des Innenbehälters im Wesentlichen definiert durch den Strömungseintrittsquerschnitt des Entleerstutzens. Aufgrund der erfindungsgemäßen Anordnung des Ventilsitzes des Rückschlagventils im Einströmbereich des Entleerstutzens oder in einem in Ausströmrichtung dem Einströmbereich vorgeordneten Bereich ist es möglich, ein nach Schließen der Absperreinrichtung mögliches Rücklaufvolumen unabhängig vom Abstand der Absperreinrichtung gegenüber der Ausströmöffnung zu minimieren.

Das Ventilgehäuse kann einstückig oder integral mit der Entnahmearmatur bzw. dem Armaturengehäuse der Entnahmearmatur verbunden sein, vorzugsweise derart, dass der Anschlussteil des Ventilgehäuses als ein integraler Bestandteil des Armaturengehäuses ausgebildet ist.

Besonders vorteilhaft es jedoch auch, wenn das Ventilgehäuse des Rückschlagventils als eine von der Entnahmearmatur unabhängig ausgebildete und handhabbare Montageeinheit ausgebildet ist, da es somit möglich ist, einen konventionellen Transport- und Lagerbehälter, dessen Innenbehälter mit einer Entnahmearmatur versehen ist, auf einfache Art und Weise mit einem Rückschlagventil auszustatten.

Wenn der Anschlussteil des Ventilgehäuses als Gehäuseflansch zur Anordnung zwischen einem Anschlussflansch der Entnahmearmatur und einem Anschlussflansch des Entleerstutzen ausgebildet ist, kann das Rückschlagventil einfach vor Montage der Entnahmearmatur mit definierter Relativpositionierung mit dem Gehäusestutzen in den Entleerstutzen des Innenbehälters eingesetzt werden.

Wenn darüber hinaus der Anschlussteil des Ventilgehäuses als Anschlagbund zur Anlage gegen eine als Bohrungsabsatz in einem Anschlussflansch des Entleerstutzens ausgebildete Anschlagfläche des Entleerstutzens ausgebildet ist, derart, dass der Anschlagbund des Ventilgehäuses im Anschlussflansch des Entleerstutzens angeordnet werden kann, kann eine Befestigung des Gehäuses des Rückschlagventils am Entleerstutzen gleichzeitig mit der Befestigung der Entnahmearmatur am Entleerstutzen erfolgen.

Aufgrund der insbesondere flächenbündigen Anordnung des Anschlagbundes des Ventilgehäuses im Anschlussflansch des Entleerstutzens kann im Prinzip gleichzeitig mit einer Schweißverbindung des Entleerstutzens mit der Entnahmearmatur eine Schweißverbindung zwischen dem Anschlagbund des Ventilgehäuses und dem Entleerstutzen einerseits und dem Anschlagbund des Ventilgehäuses und dem Anschlussflansch der Entnahmearmatur andererseits erfolgen. Im Ergebnis werden somit der Entleerstutzen des Innenbehälters und der Anschlussflansch der Entnahmearmatur sowie der Anschlagbund des Ventilgehäuses in einem einzigen Schweißvorgang stoffschlüssig miteinander verbunden.

Eine besonders funktionssichere Ausführung des Rückschlagventils wird möglich, wenn der Ventilkörper als Ventilklappe ausgebildet ist, die auf der dem Behälterinnenraum abgewandten Seite des Ventilsitzes angeordnet und an ihrem Außenrand in einem Pendellager gegenüber dem Ventilsitz schwenkbar gelagert ist. Darüber hinaus sind natürlich auch abweichend ausgebildete Ventilkörper möglich, die etwa als Formkörper in Kugel- oder Kegelform oder auch anderweitig ausgebildet sein können.

Vorzugsweise definiert der Ventilsitz eine Ventilebene, die unter einem Winkel zur Senkrechten geneigt ist, und das Pendellager ist oberhalb des Ventilsitzes angeordnet. Dabei stellt insbesondere die senkrecht geneigte Ausrichtung der Ventilebene beziehungsweise des Ventilsitzes im Zusammenwirken mit der entgegen der Ausströmrichtung schließenden Ventilklappe sicher, dass bei einem Rücklauf der zuvor aus dem Innenbehälter ausgetretenen Flüssigkeit zu der dynamischen Schließkraft aufgrund des Flüssigkeitsrücklaufs noch eine schwerkraftbedingte Schließkraft infolge der geneigten Ventilebene hinzukommt, so dass auch bei einer beispielsweise in der Entnahmearmatur stehenden Flüssigkeit immer noch die Schwerkraftkomponente der Ventilschließkraft eine definierte Schließstellung des Ventils ermöglicht.

Um zu verhindern, dass es bei einer starken Ausflussströmung aus dem Innenbehälter und extrem weit geöffneter Ventilklappe zu einem Verkannten oder Verklemmen der Ventilklappe im Ventilstutzen und damit zu einem Blockieren der Ventilklappe in Öffnungsstellung kommen kann, ist es vorteilhaft, wenn die Ventilklappe mit einer den Öffnungswinkel begrenzenden Anschlageinrichtung versehen ist.

Besonders vorteilhaft ist es, wenn die Ventilklappe hierzu an ihrem Außenrand und gegenüberliegend dem Pendellager eine als Anschlagstab ausgebildete Anschlageinrichtung aufweist, die aufgrund ihrer Positionierung als Voraussetzung für ihre Wirksamkeit nur eine vergleichsweise geringe Länge aufweisen muss.

Zur weiteren Erhöhung der vorstehend bereits erläuterten Schwerkraftkomponente der Ventilschließkraft ist es vorteilhaft, wenn die Ventilklappe mit einer Anschlusseinrichtung zur Verbindung mit einem Ballastgewicht versehen ist.

Um zu verhindern, dass das möglicherweise aus Metall bestehende Ballastgewicht in ständigem Kontakt mit der im Behälterinnenraum aufgenommenen Flüssigkeit ist, ist es vorteilhaft, die Anschlusseinrichtung auf der dem Behälterinnenraum abgewandten Seite der Ventilklappe anzuordnen.

Eine sichere Funktion des Rückschlagventils - selbst bei geringsten, im Behälterinnenraum noch vorhandener Restmenge an Flüssigkeit - wird möglich, wenn der Ventilstutzen auf der dem Behälterinnenraum zugewandten Seite der Ventilebene einen gegenüber der Ausströmrichtung mit seiner Einlauföffnung zu einem Bodensumpf des Innenbehälters geneigten Einlaufkrümmer aufweist, da somit eine möglichst vollflächige Druckbeaufschlagung der Ventilklappe vom Behälterinnenraum her zur vollständigen Entleerung des Behälters möglich ist.

Nachfolgend werden bevorzugte Ausführungsformen der Erfindung anhand der Zeichnung näher erläutert. Es zeigen:
**Fig. 1****:** eine perspektivische Darstellung eines Transport- und Lagerbehälters für Flüssigkeiten;
**Fig. 2****:** eine Schnittdarstellung einer ersten Ausführungsform eines in einem Entleerstutzen des Innenbehälters des Transport- und Lagerbehälters angeordneten Rückschlagventils;
**Fig. 3****:** das in Figur 2 in Schließstellung dargestellte Rückschlagventil in Öffnungsstellung;
**Fig. 4****:** eine perspektivische Darstellung des Rückschlagventils vom Behälterinnenraum her gesehen;
**Fig. 5****:** eine perspektivische Darstellung des Rückschlagventils in Außenansicht des Innenbehälters;
**Fig. 6****:** eine Ansicht des Rückschlagventils bei geschlossener Ventilklappe;
**Fig. 7****:** eine Längsschnittdarstellung des Rückschlagventils gemäß Schnittlinienverlauf VII-VII in Figur 6;
**Fig. 8****:** eine Ansicht des Rückschlagventils bei geöffneter Ventilklappe;
**Fig. 9****:** eine Schnittdarstellung des in Figur 8 dargestellten Rückschlagventils gemäß Schnittlinienverlauf IX-IX;
**Fig,10****:** eine zweite Ausführungsform eines Rückschlagventils mit einem in die Entnahmearmatur integrierten Ventilgehäuse.

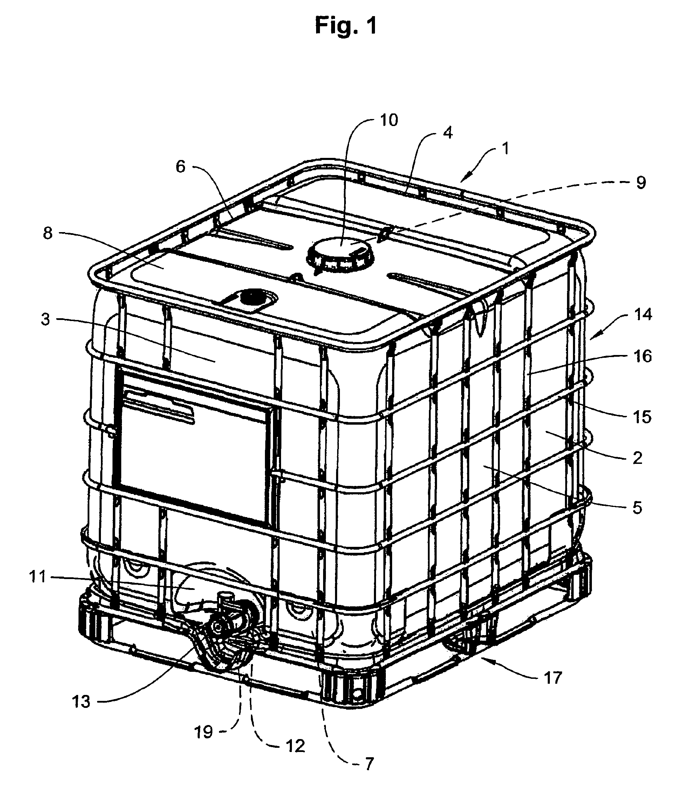

**Figur 1** zeigt einen als Einweg- und Mehrwegbehälter einsetzbaren Transport- und Lagerbehälter 1 für Flüssigkeiten, der als Hauptbauteile einen austauschbaren quaderförmigen Innenbehälter 2 aus Kunststoff aufweist mit einer Stirnwand 3, einer Rückwand 4 und zwei Seitenwänden 5, 6, einem unteren als Ablaufboden ausgebildeten Boden 7 und einem oberen Boden 8, einen an diesem angeformten, mit einem Deckel 10 verschließbaren Einfüllstutzen 9 und einem an eine Einwölbung 11 im unteren Abschnitt der Stirnwand 3 des Innenbehälters 2 angeformten Entleerstutzen 12, der mit dem Innenbehälter 2 einteilig durch Blasformen hergestellt ist, zur Anbringung einer Entnahmearmatur 13, insbesondere eines Kugel- oder Klappenhahns, ferner einen als Gittermantel ausgebildeten Außenmantel 14 mit sich kreuzenden horizontalen und vertikalen Gitterstäben 15, 16 aus Metall zur Aufnahme eines Innenbehälters 2 sowie ein palettenartiges Untergestell 17 mit euronormgerechten Längen- und Breitenabmessungen zur Abstützung des Innenbehälters 2.

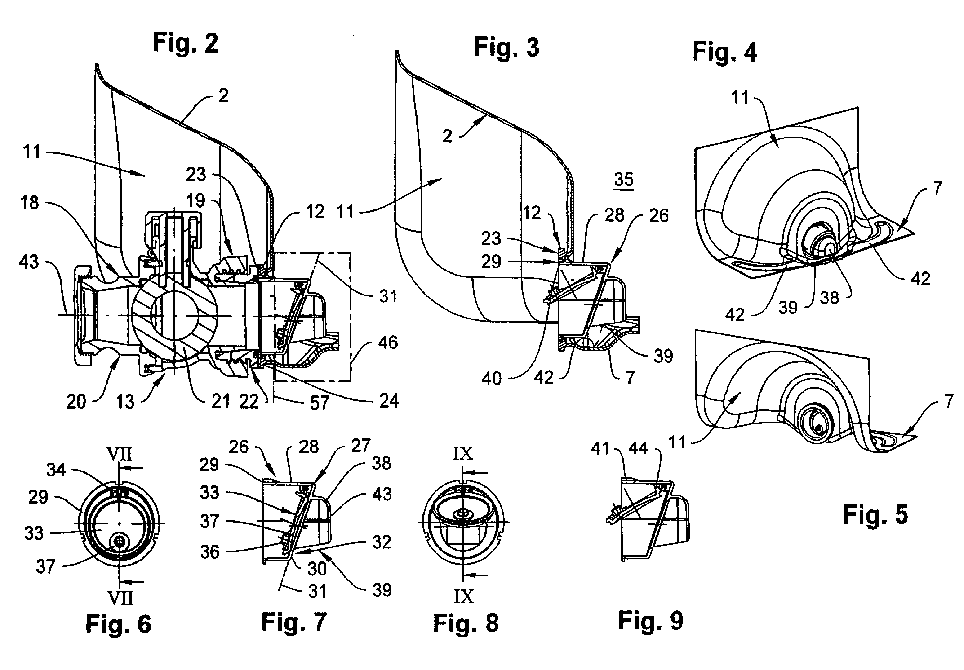

Wie **Figur 2** zeigt, besitzt ein aus einem Polyethylen hoher Dichte (PE-HD) einteilig spritzgegossenes Armaturengehäuse 18 der mit einem Kugelhahn als Absperreinrichtung 45 ausgebildeten Entnahmearmatur 13 einen Einlaufstutzen 19 und einen Auslaufstutzen 20 und ist mit einer Absperrkugel 21 ausgestattet.

Das Armaturengehäuse 18 ist im vorliegenden Fall mit dem als Mutter ausgebildeten Einlaufstutzen 19 auf den als Gewindeflansch ausgeführten, aus Kunststoff spritzgegossenen Anschlussflansch 22 aufgeschraubt, der durch eine Spiegelschweißung an dem Entleerstutzen 12 des Kunststoffinnenbehälters 2 des Transport- und Lagerbehälters 1 angeschweißt ist. **Figur 2** zeigt einen zur Durchführung des Schweißvorgangs zwischen einer Schweißfläche eines Anschlussflansch 23 des Entleerstutzens 12 und einer Schweißfläche 24 des Anschlussflansches 22 angeordneten Schweißgutring 25.

**Figur 2** zeigt ferner ein im Verbund mit der Entnahmearmatur 18 beziehungsweise dem Anschlussflansch 22 der Entnahmearmatur 18 und dem Entleerstutzen 12 des Innenbehälters 2 aufgenommenes Rückschlagventil 26. Zur Erläuterung de**s** Aufbaus des Rückschlagventils 26 wird nachfolgend zunächst auf die **Figuren 6 bis 9** Bezug genommen.

Die **Figuren 6 und 7** zeigen das Rückschlagventil 26 in Schließstellung, wohingegen die **Figuren 8 und 9** das Rückschlagventil in Öffnungsstellung zeigen. Das Rückschlagventil 26 weist ein Ventilgehäuse 27 auf, das ein stirnseitig an einem Gehäusestutzen 28 als Anschlagbund 29 ausgebildetes Anschlussteil aufweist. Gegenüberliegend dem Anschlagbund 29 befindet sich eine Gehäuserückwand 30, die eine Ventilebene 31 definiert. In der Gehäuserückwand 30 ist ein hier durch eine kreisrunde Blendenöffnung definierter Ventilsitz 32 ausgebildet, der zur Erzielung der Ventilfunktion mit einer Ventilklappe 33 zusammenwirkt, die oberhalb des Ventilsitzes 32 in einem Pendellager 34 gelagert ist. Ein am Außenrand der Ventilklappe 33 angeordneter Anschlagstab 44 verhindert ein Verklemmen der geöffneten Ventilklappe 33 im Ventilstutzen 28.

Der Ventilsitz 32 des Rückschlagventils 26 ist im Fall des vorliegenden Ausführungsbeispiels in einem sich bei einer Flüssigkeitsentnahme aus dem Innenbehälter 2 ergebenden Einströmbereich 46 des Entleerstutzens 12 angeordnet und befindet sich bei diesem Ausführungsbeispiel in Ausströmrichtung vor der Ausströmöffnung den Innenbehälters 2, also vor einem Strömungseintrittsquerschnitt 57 des Entleerstutzens 12.

Die Ventilklappe 33 weist auf ihrer dem Ventilsitz 32 beziehungsweise einem Behälterinnenraum 35 (**Figur 3**) abgewandten Seite eine Anschlusseinrichtung 36 auf, die zur Verbindung mit einem Ballastgewicht 37 dient. Im Zusammenwirken mit der bezüglich einer Längsachse 43 des Rückschlagventils 26 geneigten Anordnung der Ventilebene 31 unterstützt somit das Ballastgewicht 37 die Ausbildung einer Ventilschließkraft.

Wie die **Figur 7** ferner zeigt, schließt an die Gehäuserückwand 30 ein Ventilkrümmer 38 an, der eine bezogen auf die Ventillängsachse 43 senkrecht angeordnete Einlauföffnung 39 definiert.

**Figur 3** zeigt das mit dem Ventilstutzen 28 in den Entleerstutzen 12 eingesetzte Rückschlagventil 26, wobei die Relativpositionierung des

Rückschlagventils 26 im Entleerstutzen 12 beziehungsweise in dem Innenbehälter 2 durch den Anschlag des Anschlagbundes 29 des Rückschlagventils 26 gegen eine Anschlagfläche des Entleerstutzens 12 definiert ist, die durch einen Bohrungsabsatz 40 im Anschlusssflansch 23 des Entleerstutzens 12 gebildet ist. Wie sich ferner aus einer Zusammenschau der **Figuren 3 und 9** ergibt, wird eine Fixierung dieser Relativpositionierung des Rückschlagventils 26 im Entleerstutzen 12 dadurch ermöglicht, dass im Bereich des Anschlagbundes 29 des Ventilstutzens 28 ausgebildete Stege 41 eine Verstemmung des Ventilstutzens 28 im Entleerstutzen 12 bewirken.

Eine Zusammenschau der **Figuren 3 und 4** macht deutlich, dass sich eine durch den Ventilkrümmer 38 definierte Einlauföffnung 39 des Rückschlagventils 26 in unmittelbarer Nähe zu einem im unteren Boden 7 des Innenbehälters 2 ausgebildeten Bodensumpf 42 befindet, der die tiefste Stelle des Behälterbodens 7 bildet.

Die besonders einfache Ausstattung des Innenbehälters 2 mit dem Rückschlagventil 26 wird deutlich aufgrund einer Zusammenschau der **Figuren 2 und 5**, die zeigen, dass das Rückschlagventil 26 nach seinem Einsetzen in den Entleerstutzen 12 des Innenbehälters 2 mit seinem Anschlagbund 29 bündig im Anschlussflansch 23 des Entleerstutzens 12 angeordnet ist, so dass die in **Figur 2** dargestellte Verbundanordnung zwischen der Entnahmearmatur 18 beziehungsweise dem Anschlussflansch 22 der Entnahmearmatur 18, dem Rückschlagventil 26 und dem Entleerstutzen 12 des Innenbehälters 2 möglich wird. Somit kann das Rückschlagventil 26, ohne Änderungen an der Entnahmearmatur 18 beziehungsweise dem Anschlussflansch 22 der Entnahmearmatur 18 oder dem Entleerstutzen 12 des Innenbehälters 2 vornehmen zu müssen, an einem bestehenden Transport- und Lagerbehälter zum Einsatz kommen.

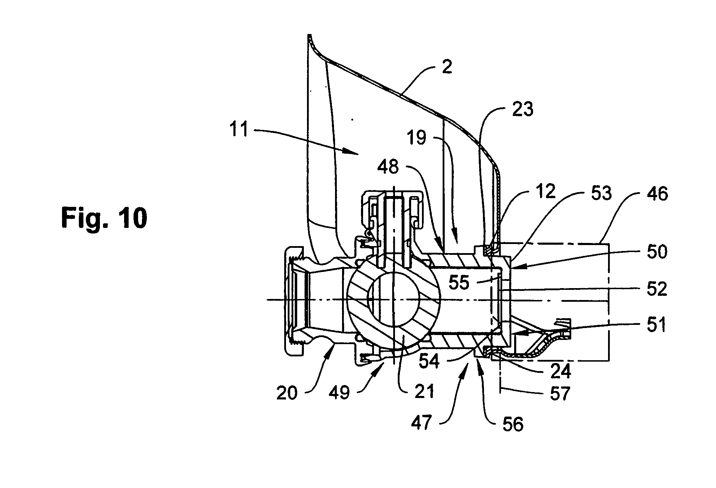

**Figur 10** zeigt in einer weiteren Ausführungsform ein Rückschlagventil 47, dessen Ventilgehäuse 51 einen Anschlussteil aufweist, der als Ringflansch 56 einstückig an einem Armaturengehäuse 48 einer Entnahmearmatur 49 ausgebildet ist und im Fall des vorliegenden Ausführungsbeispiels gleichzeitig den Anschlussflansch zum Anschluss der Entnahmearmatur 49 an den Entleerstutzen 12 bildet. Abgesehen von dem Armaturengehäuse 48 weist die Entnahmearmatur 49 mit der in **Figur 2** dargestellten Entnahmearmatur 13 übereinstimmende Bauteile und damit entsprechend übereinstimmende Bezugszeichen auf.

Das Rückschlagventil 47 weist ein durch einen Zulaufstutzen 50 des Armaturengehäuse 48 ausgebildetes Ventilgehäuse 51 auf, mit einem hier als Ventilklappe 52 ausgebildeten Ventilkörper, der in der in **Figur 10** dargestellten Schließstellung des Rückschlagventils 47 in einem in einer Gehäuserückwand 53 des Ventilgehäuses 51 ausgebildeten Ventilsitz 54 aufgenommen ist. Im Fall des vorliegenden Ausführungsbeispiels befindet sich der Ventilsitz 54 im Bereich des Strömungseintrittsquerschnitts 57 des Entleerstutzens 12. Zur Ausbildung eines Pendellagers 55 ist die Ventilklappe 52 über ein Scharniergelenk an die Gehäuserückwand angeschlossen. Das Scharniergelenk kann unmittelbar in der vorzugsweise selbst abdichtenden Ventilklappe 52 oder auch in einer mit der Ventilklappe 52 verbundenen Dichtung ausgebildet sein.

## Patentansprüche

1. Transport- und Lagerbehälter für Flüssigkeiten mit einem verschließbaren Einfüllstutzen und einem Entleerstutzen, an dem eine mit einer Absperreinrichtung versehene Entnahmearmatur angeschlossen ist, wobei die Entnahmearmatur ein Armaturengehäuse mit einem Anschlussflansch zum Anschluss der Entnahmearmatur an den Entleerstutzen des Flüssigkeitsbehälters, insbesondere des Innenbehälters aus Kunststoff des mit einem Außenmantel aus Gitterwerk oder Blech ausgestatteten Transport- und Lagerbehälters, aufweist, wobei das Armaturengehäuse (18, 48) der Entnahmearmatur (13, 49) mit einem Rückschlagventil (26, 47) versehen ist, das ein Ventilgehäuse (27, 51) aufweist, das mit einem Anschlussteil zum Anschluss an ein Armaturengehäuse (18, 48) der Entnahmearmatur (13, 49) und/oder den Entleerstutzen (12) des Flüssigkeitsbehälters und mit einem sich vom Anschlussteil durch den Entleerstutzen bis zumindest in einen Einströmbereich (46) des Entleerstutzen erstreckenden Ventilstutzen (28) versehen ist, wobei der Ventilstutzen einen entgegen der Ausströmrichtung gegen einen Ventilsitz (32, 54) schließenden Ventilkörper aufweist und der Ventilsitz im Einströmbereich oder in einem in Ausströmrichtung dem Einströmbereich vorgeordneten Bereich angeordnet ist.

2. Transport- und Lagerbehälter nach Anspruch 1,
**dadurch gekennzeichnet,**
**dass** der Anschlussteil des Ventilgehäuses (51) als ein integraler Bestandteil des Armaturengehäuses (48) ausgebildet ist.

3. Transport- und Lagerbehälter nach Anspruch 1,
**dadurch gekennzeichnet,**
**dass** das Ventilgehäuse (27) des Rückschlagventils (26) als eine von der Entnahmearmatur (13) unabhängig handhabbare Montageeinheit ausgebildet ist.

4. Transport- und Lagerbehälter nach Anspruch 3,
**dadurch gekennzeichnet,**
**dass** der Anschlussteil des Ventilgehäuses (27) als Gehäuseflansch zur Anordnung zwischen einem Anschlussflansch (22) der Entnahmearmatur (13) und einem Anschlussflansch(23) des Entleerstutzens (12) ausgebildet ist.

5. Transport- und Lagerbehälter nach Anspruch 4,
**dadurch gekennzeichnet,**
**dass** der Anschlussteil des Ventilgehäuses (27) als Anschlagbund (29) zur Anlage gegen eine als Bohrungsabsatz (40) in einem Anschlussflansch (23) des Entleerstutzens ausgebildete Anschlagfläche des Entleerstutzens (12) ausgebildet ist, derart, dass der Anschlagbund des Ventilgehäuses vorzugsweise im Wesentlichen flächenbündig im Anschlussflansch des Entleerstutzens angeordnet ist.

6. Transport- und Lagerbehälter nach einem der vorangehenden Ansprüche,
dadurch gekennz-eichnet,
dass der Ventilkörper als Ventilklappe (33) ausgebildet und auf der dem Behälterinnenraum (35) abgewandten Seite des Ventilsitzes (32) angeordnet ist, wobei die Ventilklappe an ihrem Außenrand in einem Pendellager (34) gegenüber dem Ventilsitz schwenkbar gelagert ist.

7. Transport- und Lagerbehälter nach Anspruch 6,
**dadurch gekennzeichnet,**
**dass** der Ventilsitz (32) eine Ventilebene (31) definiert, die unter einem Winkel zur Senkrechten geneigt ist und das Pendellager (34) oberhalb des Ventilsitzes angeordnet ist.

8. Transport- und Lagerbehälter nach Anspruch 6 oder 7,
**dadurch gekennzeichnet,**
**dass** die Ventilklappe (33) mit einer den Öffnungswinkel begrenzenden Anschlageinrichtung versehen ist.

9. Transport- und Lagerbehälter nach Anspruch 8,
**dadurch gekennzeichnet,**
**dass** die Ventilklappe (33) an ihrem Außenrand und gegenüberliegend dem Pendellager (34) eine als Anschlagstab (44) ausgebildete Anschlageinrichtung aufweist.

10. Transport- und Lagerbehälter nach einem der vorangehenden Ansprüche,
**dadurch gekennzeichnet,**
**dass** die Ventilklappe (33) mit einer Anschlusseinrichtung (36) zur Verbindung mit einem Ballastgewicht (37) versehen ist.

11. Transport- und Lagerbehälter nach Anspruch 10,
**dadurch gekennzeichnet,**
**dass** die Anschlusseinrichtung (36) auf der dem Behälterinnenraum (35) abgewandten Seite der Ventilklappe (33) angeordnet ist.

12. Transport- und Lagerbehälter nach einem der vorangehenden Ansprüche,
**dadurch gekennzeichnet,**
**dass** der Ventilstutzen (28) auf der dem Behälterinnenraum (35) zugewandten Seite der Ventilebene (31) einen gegenüber der Ausströmrichtung mit seiner Einlauföffnung (39) zu einem Bodensumpf (42) des Innenbehälters (2) geneigten Ventilkrümmer (38) aufweist.

## Claims

1. Transport and storage container for liquids, including a closable filling neck and a draining neck to which a tapping armature with a closing device is connected, wherein the tapping armature comprises an armature housing with a connection flange for connecting the tapping armature to the draining neck of the liquid container, in particular of the inner container made of plastic of the transport and storage container provided with an outer mantle made of lattice or sheet metal, wherein the armature housing (18, 48) of the tapping armature (13, 49) is provided with a check valve (26, 47), which comprises a valve housing (27, 51), which is provided with a connecting part for connecting to an armature housing (18, 48) of the tapping armature (13, 49) and/or to the draining neck (12) of the liquid container and which valve housing is provided with a valve neck (28) which at least extends from the connecting part through the draining neck into an inflow area (46) of the draining neck, wherein the valve neck comprises a valve body closing against a valve seat (32, 54) in a direction against the outflow direction and the valve seat is disposed within the inflow area or an area which is located upstream of the inflow area.

2. Transport and storage container according to claim 1,
**characterized in that**
the connecting part of the valve housing (51) is formed as an integral part of the armature housing (48).

3. Transport and storage container according to claim 1,
**characterized in that**
the valve housing (27) of the check valve (26) is formed as a mounting unit operable independently of the tapping armature (13).

4. Transport and storage container according to claim 3,
**characterized in that**
the connecting part of the valve housing (27) is formed as a housing flange for disposition between a connecting flange (22) of the tapping armature (13) and a connecting flange (23) of the draining neck (12).

5. Transport and storage container according to claim 4,
**characterized in that**
the connecting part of the valve housing (27) is formed as a stop collar (29) for placement against a stop surface of the draining neck (12) which stop surface is formed as a bore ledge (40) in a connecting flange (23) of the draining neck (12), such that the stop collar of the valve housing is preferably disposed substantially vertically flush in the connecting flange of the draining neck.

6. Transport and storage container according to one of the previous claims,
**characterized in that**
the valve body is formed as a valve flap (33) and disposed on the side of the valve seat (32) facing away from the interior of the container (35), wherein the valve flap is disposed swivelably on its edge in a pendulum bearing (34) relative to the valve seat.

7. Transport and storage container according to claim 6,
**characterized in that**
the valve seat (32) defines a valve plane (31), which is inclined under an angle towards the vertical, and the pendulum bearing (34) is disposed above the valve seat.

8. Transport and storage container according to claim 6 or 7,
**characterized in that**
the valve flap (33) includes a stop device defining the opening angle.

9. Transport and storage container according to claim 8,
**characterized in that**
the valve flap (33) comprises a stop device formed as a stop rod (44) on its edge and opposite of the pendulum bearing (34).

10. Transport and storage container according to any of the previous claims,
**characterized in that**
the valve flap (33) comprises a connecting device (36) for connection to a ballast weight (37).

11. Transport and storage container according to claim 10,
**characterized in that**
the connection device (36) is disposed on the side of the valve flap (33) facing away from the interior of the container (35).

12. Transport and storage container according to any of the previous claims,
**characterized in that**
the valve neck (28) comprises a valve bend (38) on the side of the valve plane (31) facing towards the interior of the container (35), the valve bend being inclined towards a bottom sump (42) of the inner container (2) with its inflow opening (39) in relation to the outflow direction.

## Revendications

1. Cuve de transport et stockage pour liquides, comprenant une tubulure de remplissage fermable et une tubulure de drainage, auquel une armature de soutirage avec un dispositif de verrouillage est connectée, dans lequel l'armature de soutirage comprend un boîtier d'armature avec une bride de raccordement pour connecter l'armature de soutirage à la tubulure de drainage de la cuve de liquide, en particulier de la cuve intérieure en matière plastique de la cuve de transport et stockage pourvue d'une gaine extérieure en treillage ou tôle métallique, dans lequel le boîtier d'armature (18, 48) de l'armature de soutirage (13, 49) est pourvu d'un clapet de retenue (26, 47), qui comprend un boîtier de clapet (27, 51) qui est pourvu d'une pièce reliant pour connexion à un boîtier d'armature (18, 48) de l'armature de soutirage (13, 49) et/ou à la tubulure de drainage (12) de la cuve pour liquides et qui est pourvu d'une tubulure de clapet (28) s'étendant de la pièce reliant par la tubulure de drainage au moins à une zone d'afflux (46) de la tubulure de drainage, dans lequel la tubulure de clapet comprend un corps de clapet fermant au-devant du siège de clapet (32, 54) en direction au-devant de la direction d'émanation, le siège de clapet étant disposé dans la zone d'afflux ou dans une zone en amont de la zone d'afflux.

2. Cuve de transport et stockage selon la revendication 1,
**caractérisée en ce que**
la pièce reliant du boîtier de clapet (51) est formé comme un composant intégral du boîtier d'armature (48).

3. Cuve de transport et stockage selon la revendication 1,
**caractérisée en ce que**
le boîtier de clapet (27) du clapet de retenue (26) est formé comme une unité de montage opérable indépendante de l'armature de soutirage (13).

4. Cuve de transport et stockage selon la revendication 3,
**caractérisée en ce que**
la pièce reliant du boîtier de clapet (27) est formée comme une bride de boîtier pour la disposition entre la bride de raccordement (22) d'armature de soutirage (13) et une bride de raccordement (23) de la tubulure de drainage (12).

5. Cuve de transport et stockage selon la revendication 4,
**caractérisée en ce que**
la pièce reliant du boîtier de clapet (27) est formée comme un collet de butée (29) pour le placement contre une surface de butée de la tubulure de drainage (12), la surface de butée formée comme un épaulement de perçage (40) dans une bride de raccordement (23) de la tubulure de drainage, de telle façon que le collet de butée du boîtier de clapet soit préférablement disposé substantiellement à une surface plane dans la bride de raccordement de la tubulure de drainage.

6. Cuve de transport et stockage selon l'une quelconque des revendications précédentes,
**caractérisée en ce que**
le corps de clapet est formé comme un clapet de soupape (33) et il est disposé sur la face du siège de clapet (32) opposé a l'intérieur (35) de la cuve, dans lequel le clapet de soupape est disposé pivotable sur son bord extérieur dans un palier pendulaire (34) en relation du siège de clapet.

7. Cuve de transport et stockage selon la revendication 6,
**caractérisée en ce que**
le siège de clapet (32) définit une plaine de clapet (31) qui est inclinée sous un angle vers la verticale et que le palier pendulaire (34) est disposé au-dessus du siège de clapet.

8. Cuve de transport et stockage selon la revendication 6 ou 7,
**caractérisée en ce que**
le clapet de soupape (33) est équipé d'un dispositif de butée définissant l'angle d'aperture.

9. Cuve de transport et stockage selon la revendication 8,
**caractérisée en ce que**
le clapet de soupape (33) comprend un dispositif de butée formé comme une barre de butée (44) sur son bord extérieur et face au palier pendulaire (34).

10. Cuve de transport et stockage selon l'une quelconque des revendications précédentes,
**caractérisée en ce que**
le clapet de soupape (33) est équipé d'un dispositif de raccordement (36) pour la connexion à un poids de lest (37).

11. Cuve de transport et stockage selon la revendication 10,
**caractérisée en ce que**
le dispositif de raccordement (36) est disposé au côté du clapet de soupape (33) opposé à l'intérieur (35) de la cuve.

12. Cuve de transport et stockage selon l'une quelconque des revendications précédentes,
**caractérisée en ce que**
l'élément de clapet (28) comprend au côté de la plaine de clapet (31) orienté vers l'intérieur (35) de la cuve une courbe de clapet (38) incliné avec son aperture d'afflux (39) vers la direction d'émanation à un bout de décanteur (42) de la cuve intérieure (2).
